# EUROPEAN PATENT APPLICATION

(11) **EP 4 840 920 A1**
(43) Date of publication of application: **18.11.2026**
(21) Application number: 26178412.8
(22) Date of filing: 13.05.2026
(51) Int. Cl.: C09J 7/10

(54) **ADHESIVE FILM, OPTICAL MEMBER AND OPTICAL DISPLAY APPARATUS**

(30) Priority: 14.05.2025 KR 20250062590
(71) Applicant: SAMSUNG SDI CO., LTD., Yongin-si, Gyeonggi-do 17084 (KR)
(72) Inventor: CHOI, Sung Hak, 16678 Suwon-si, Gyeonggi-do (KR); LEE, Jin Young, 16678 Suwon-si, Gyeonggi-do (KR); LEE, Ju Hui, 16678 Suwon-si, Gyeonggi-do (KR); SHIN, Dong Myeong, 16678 Suwon-si, Gyeonggi-do (KR)
(74) Representative: Michalski Hüttermann & Partner mbB

(57) **Abstract**

An adhesive film, an optical member including the same, and an optical display apparatus including the same are disclosed. An adhesive film includes two first regions arranged in a first direction, and a second region between the first regions, and an indentation modulus ratio of an indentation modulus of the first region to an indentation modulus of the second region is greater than or equal to 1.5, and a refractive index difference between the first region and the second region is less than or equal to 0.02.

## Description

### CROSS REFERENCE TO RELATED APPLICATION

The present application claims priority to and the benefit of Korean Patent Application No. 10-2025-0062590, filed on May 14, 2025 in the Korean Intellectual Property Office.

### 1. Field

Aspects of embodiments of the present invention relate to an adhesive film, an optical member including the same, and an optical display apparatus including the same.

### 2. Description of the Related Art

An adhesive film is used to bond optical members together in an optical display apparatus. Recently, with increasing interest in foldable optical display apparatuses, the adhesive film in the optical display apparatus is desired to have good foldability.

When an adhesive film is used in a foldable optical display apparatus, the adhesive film may be applied to both a folding portion and a non-folding portion. A region of the adhesive film disposed on the folding portion is repeatedly folded when the foldable optical display apparatus is repeatedly folded. A region of the adhesive film disposed on the non-folding portion is not folded even when the foldable optical display apparatus is folded. Typically, the folding portion is disposed between the non-folding portions.

It is desirable that the adhesive film provide required properties to each of the folding portion and the non-folding portion while preventing or substantially preventing the interface between the folding portion and the non-folding portion from being visible.

The background technique of the present invention is disclosed in Japanese Unexamined Patent Publication No. 2020-111734 and the like.

### SUMMARY

According to an aspect of embodiments of the present invention, an adhesive film having suitable properties for each of a folding portion and a non-folding portion while minimizing or reducing visibility of an interface between the folding portion and the non-folding portion is provided.

According to one or more embodiments of the present invention, an adhesive film is provided.

According to one or more embodiments of the present invention, an adhesive film includes two first regions arranged in a first direction and a second region between the first regions, wherein an indentation modulus ratio of an indentation modulus of the first region to an indentation modulus of the second region is greater than or equal to 1.5 and a refractive index difference between the first region and the second region is less than or equal to 0.02.

In one or more embodiments, the first region has an indentation modulus at 25°C of 10 MPa to 30 MPa, and the second region has an indentation modulus at 25°C of 0.5 MPa to 10 MPa.

In one or more embodiments, the first region has a refractive index of 1.3 to 1.5, and the second region has a refractive index of 1.3 to 1.5.

In one or more embodiments, the first region and the second region are integrally formed with each other.

In one or more embodiments, the second region comprises a cured product of a composition comprising a polymer of a monomer mixture comprising an alkyl group-containing (meth)acrylic monomer, a hydroxyl group-containing (meth)acrylic monomer and an alkylene glycol group-containing (meth)acrylic monomer, and a photoinitiator.

In one or more embodiments, the monomer mixture comprises 50 wt% to 90 wt% of the alkyl group-containing (meth)acrylic monomer, 1 wt% to 30 wt% of the hydroxyl group-containing (meth)acrylic monomer, and 5 wt% to 40 wt% of the alkylene glycol group-containing (meth)acrylic monomer.

In one or more embodiments, the composition further comprises at least one of a crosslinking agent or a silane coupling agent.
In one or more embodiments, the alkyl group-containing (meth)acrylic monomer comprises at least one of 2-ethylhexyl (meth)acrylate or iso-octyl (meth)acrylate;
In one or more embodiments, the hydroxyl group-containing (meth)acrylic acid monomer comprises at least one of 4-hydroxybutyl (meth)acrylate or 2-hydroxyethyl (meth)acrylate; and
the alkylene glycol group-containing (meth)acrylic monomer comprises at least one ether-based (meth)acrylate containing 1 mole or more of ethylene glycol.

9.The adhesive film as claimed in 1 to 8, wherein the first region comprises a cured product of a composition comprising a monomer mixture comprising a first monomer, a second monomer, a third monomer and a fourth monomer, and a photoinitiator,
the fourth monomer being t-butyl (meth)acrylate.

10.The adhesive film as claimed in 1 to 9, wherein the first monomer is an alkyl group-containing (meth)acrylic monomer,
the second monomer is a hydroxyl group-containing (meth)acrylic monomer, and
the third monomer has a homopolymer glass transition temperature of 50°C or higher and is at least one of a (meth)acrylic monomer having alicyclic groups at an ester site thereof or a (meth)acrylic monomer having a heterocyclic group at an ester site thereof.

11.The adhesive film as claimed in 1 to 10, wherein the first monomer comprises at least one of 2-ethylhexyl (meth)acrylate or iso-octyl (meth)acrylate;
the second monomer comprises at least one of 4-hydroxybutyl (meth)acrylate or 2-hydroxyethyl (meth)acrylate;
the third monomer comprises at least one selected from among isobornyl (meth)acrylate, bornyl (meth)acrylate, dihydrodicyclopentadienyl (meth)acrylate, (meth)acryloylmorpholine, cyclohexyl (meth)acrylate, and n-vinylpyrrolidone; and
the fourth monomer is t-butyl (meth)acrylate.

12.The adhesive film as claimed in 1 to 11, wherein the monomer mixture comprises 10 wt% to 50 wt% of the first monomer, 1 wt% to 30 wt% of the second monomer, 1 wt% to 30 wt% of the third monomer, and 40 wt% to 80 wt% of the fourth monomer.

13.The adhesive film as claimed in 1 to 12, wherein the composition further comprises at least one of a crosslinking agent or a photoinitiator.

14.The adhesive film as claimed in 1 to 13, wherein a storage modulus ratio of the first region to the second region at 25°C is greater than or equal to 10.

In accordance with another aspect of the present invention, an optical member is provided.

The optical member includes the adhesive film.

In accordance with a further aspect of the present invention, an optical display apparatus is provided.

The optical display apparatus includes the adhesive film or the optical member.

According to embodiments, the adhesive film has suitable properties for each of a folding portion and a non-folding portion to secure both foldability and impact resistance while minimizing visibility of an interface between the folding portion and the non-folding portion, thereby significantly improving usability of a foldable optical display apparatus.

### BREIF DESCRIPTION OF THE DRAWINGS

FIG. 1 is a plan view of an adhesive film according to an embodiment.
FIG. 2 is a cross-sectional view of the adhesive film of FIG. 1.
FIG. 3 shows a width-dependent indentation modulus of an adhesive film according to an embodiment, in which the X-axis represents the width of the adhesive film (unit: mm), 0 on the X-axis represents a folding axis, and the Y-axis represents the width-dependent indentation modulus (unit: MPa) of the adhesive film.
FIG. 4 shows an interface (indicated by a red arrow) between a folding portion S and a non-folding portion R in an adhesive film of Example 1.
FIG. 5 shows an interface (indicated by a red arrow) between a folding portion S and a non-folding portion R in an adhesive film of Comparative Example 1.

### DETAILED DESCRIPTION

Herein, some embodiments of the present invention will be described in further detail with reference to the accompanying drawings. However, it is to be understood that the present invention is not limited to the following embodiments and may be embodied in different ways, and that the embodiments are provided for disclosure and to facilitate thorough understanding of the present invention by those skilled in the art.

The terminology used herein is for the purpose of describing embodiments but is not intended to limit the present invention. Herein, the singular forms "a," "an," and "the" are intended to include the plural forms as well, unless the context specifically indicates otherwise.

Herein, "homopolymer glass transition temperature" may refer to a glass transition temperature (Tg) of a homopolymer of a target monomer measured using a differential scanning calorimeter (DSC Discovery, TA Instruments Inc.). Specifically, the homopolymer of the target monomer is heated to 180°C at a heating rate of 20°C/min, slowly cooled to -100°C, and heated again to 100°C at a heating rate of 10°C/min to obtain data on an endothermic transition curve. Here, an inflection point of the endothermic transition curve may be determined as the glass transition temperature.

Herein, "(meth)acryl" refers to acryl and/or methacryl.

Herein, "indentation modulus" may refer to a value measured at 25°C. The indentation modulus of an adhesive film may be measured at intervals of 5 mm in a first direction of the adhesive film.

Herein, the first direction of the adhesive film may refer to a direction in which first and second regions of the adhesive film are disposed. For a method of measuring the indentation modulus, an experiment is described below.

As used herein to represent a specific numerical range, the expression "X to Y" means "greater than or equal to X and less than or equal to Y (X≥ and ≤Y)."

According to one or more embodiments, an adhesive film for a foldable optical display apparatus is provided. The adhesive film may be applied to a foldable optical display apparatus having a folding portion and non-folding portions, in which the folding portion is disposed between the non-folding portions.

The adhesive film includes two first regions disposed in the first direction and a second region disposed between the first regions.

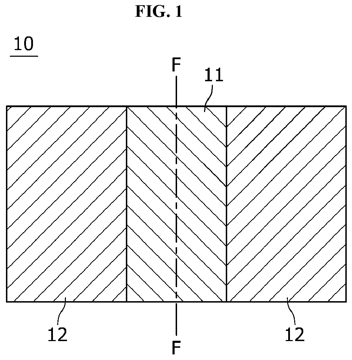

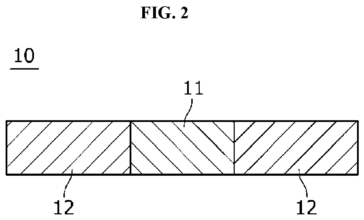

FIG. 1 is a plan view of an adhesive film according to an embodiment; and FIG. 2 is a cross-sectional view of the adhesive film of FIG. 1.

Referring to FIG. 1 and FIG. 2, an adhesive film 10 has two first regions 12 and a second region 11 disposed between the first regions 12. In FIG. 1, F denotes a folding axis in a foldable optical display apparatus.

In the adhesive film 10, the first regions 12 and the second region 11 are disposed in the first direction. As used herein, "first direction" refers to a direction perpendicular to the folding axis F in FIG. 1.

In the adhesive film 10, the first region 12 is a non-folding region and the second region 11 is formed on the folding axis F and thus corresponds to a folding region. Thus, the first region 12 improves impact resistance of the adhesive film 10, and the second region 11 provides foldability of the adhesive film 10.

In an embodiment, in the adhesive film 10, an indentation modulus ratio of an indentation modulus of the first region 12 to an indentation modulus of the second region 11 is greater than or equal to 1.5.

In an embodiment, the first regions 12 and the second region 11 are integrally formed with each other. In order to form the first regions 12 and the second region 11 in a single process, a composition of each of the first regions 12 and the second region 11 is suitably adjusted. In an embodiment, the indentation modulus ratio is greater than or equal to 1.5, and the first region 12 and the second region 11 are formed of a similar composition, thereby improving processability of the adhesive film.

If the indentation modulus ratio is less than 1.5, the adhesive film can exhibit poor foldability and impact resistance, and it may not be easy to manufacture an adhesive film having an arrangement structure of the first regions and the second region. In an embodiment, the adhesive film may have an indentation modulus ratio of 1.5 to 5, for example, 1.5, 1.6, 1.7, 1.8, 1.9, 2, 2.1, 2.2, 2.3, 2.4, 2.5, 2.6, 2.7, 2.8, 2.9, 3, 3.1, 3.2, 3.3, 3.4, 3.5, 3.6, 3.7, 3.8, 3.9, 4, 4.1, 4.2, 4.3, 4.4, 4.5, 4.6, 4.7, 4.8, 4.9, 5, 3 to 5, or 3 to 4.

As known in the art, the indentation modulus refers to a value measured using a nano-indenter. In an embodiment, each of the first region 12 and the second region 11 has a predetermined area.

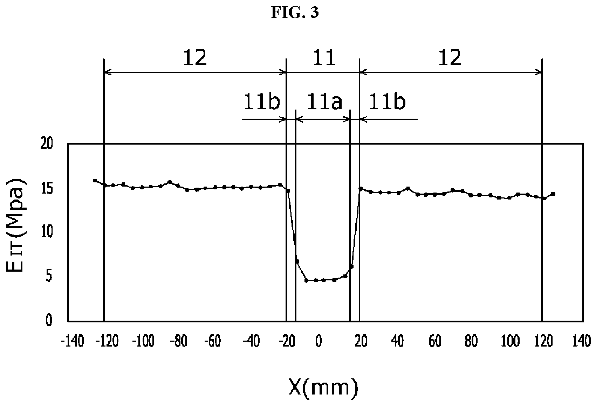

FIG. 3 shows a width-dependent indentation modulus of an adhesive film according to an embodiment. In FIG. 3, the X-axis represents the width of the adhesive film (unit: mm), 0 on the X-axis represents a folding axis, and the Y-axis represents the width-dependent indentation modulus (unit: MPa) of the adhesive film.

Referring to FIG. 3, it can be seen that the first region 12 has a substantially constant indentation modulus along a width thereof.

The indentation modulus of the first region 12 may be an average of indentation moduli measured at intervals of 5 mm in the first region in the first direction of the adhesive film.

In an embodiment, the first region may have an indentation modulus of 10 MPa to 30 MPa, for example, 10, 11, 12, 13, 14, 15, 16, 17, 18, 19, 20, 21, 22, 23, 24, 25, 26, 27, 28, 29, 30 MPa, 10 MPa to 20 MPa, or 15 MPa to 20 MPa. Within this range, the adhesive film can easily achieve the above indentation modulus ratio and can exhibit good impact resistance.

Referring to FIG. 3, it can be seen that the second region 11 includes a region 11a having a significantly low indentation modulus and a region 11b having a variable indentation modulus. It can be seen that the region 11a is disposed between regions 11b, and the region 11a has a substantially constant indentation modulus.

The indentation modulus of the second region 11 is defined as the minimum value or a value in the region 11a among indentation moduli measured at intervals of 5 mm in the second region in the first direction of the adhesive film.

In an embodiment, the second region may have an indentation modulus of 0.5 MPa to 10 MPa, for example, 0.5, 1, 1.5, 2, 2.5, 3, 3.5, 4, 4.5, 5, 5.5, 6, 6.5, 7, 7.5, 8, 8.5, 9, 9.5, 10 MPa, 1 MPa to 10 MPa, or 1 MPa to 5 MPa. Within this range, the adhesive film can achieve the above indentation modulus ratio and can exhibit good foldability.

In an embodiment, the first region 12 and the second region 11 have different indentation moduli, and the first region 12 and the second region 11 may be formed of different compositions. As a result, the first region 12 and the second region 11 have different indexes of refraction, thereby allowing the interface between the first region 12 and the second region 11 to be visible to the naked eye.

The adhesive film according to an embodiment has a refractive index difference of 0.02 or less between the first region 12 and the second region 11. If the refractive index difference is greater than 0.02, the interface between the first region 12 and the second region 11 can be easily visible, thereby reducing usability of the foldable optical display apparatus. For example, the adhesive film may have a refractive index difference of 0 to 0.02, 0 to 0.005, or 0 to 0.001.

In an embodiment, the first region 12 may have a higher or lower index of refraction than the second region 11. Accordingly, an absolute value of the refractive index difference between the first region 12 and the second region 11 may be 0.02 or less, for example, 0 to 0.02, 0 to 0.005, or 0 to 0.001.

In an embodiment, the first region 12 may have a refractive index of 1.3 to 1.5, for example, 1.3, 1.31, 1.32, 1.33, 1.34, 1.35, 1.36, 1.37, 1.38, 1.39, 1.4, 1.41, 1.42, 1.43, 1.44, 1.45, 1.46, 1.47, 1.48, 1.49, 1.5, 1.35 to 1.5, or 1.4 to 1.5. Within these ranges, the adhesive film can be easily manufactured.

In an embodiment, the second region 11 may have a refractive index of 1.3 to 1.5, for example, 1.3, 1.31, 1.32, 1.33, 1.34, 1.35, 1.36, 1.37, 1.38, 1.39, 1.4, 1.41, 1.42, 1.43, 1.44, 1.45, 1.46, 1.47, 1.48, 1.49, 1.5, 1.35 to 1.5, or 1.4 to 1.5. Within these ranges, the adhesive film can be easily manufactured.

As used herein, "refractive index" may be a value measured using a refractometer at a wavelength of 550 nm.

In an embodiment, the adhesive film may have a storage modulus ratio of the first region to the second region of 10 or more, for example, 10 to 20, as measured at 25°C. Within these ranges, the adhesive film can exhibit good foldability and impact resistance at room temperature.

The inventor of the present invention has devised an adhesive film composition that forms each of the first region and the second region to easily achieve the indentation modulus ratio and the refractive index difference within the above ranges. Herein, the adhesive film composition for each of the first region and the second region will be described in further detail.

### Second region

The second region may include a cured product of a composition, which includes a monomer mixture comprising an alkyl group-containing (meth)acrylic monomer, a hydroxyl group-containing (meth)acrylic monomer and an alkylene glycol group-containing (meth)acrylic monomer, and a photoinitiator.

In an embodiment, the second region may include a cured product of a composition, which includes a polymer of a monomer mixture of an alkyl group-containing (meth)acrylic monomer, a hydroxyl group-containing (meth)acrylic monomer and an alkylene glycol group-containing (meth)acrylic monomer, and a photoinitiator.

The composition may further include at least one selected from among a crosslinking agent, a silane coupling agent, and additives.

The alkyl group-containing (meth)acrylic monomer can facilitate formation of a matrix of the second region of the adhesive film. In an embodiment, the alkyl group-containing (meth)acrylic monomer may include a (meth)acrylate containing an unsubstituted linear or branched C₁ to C₁₀ alkyl group at an ester site thereof. For example, the alkyl group-containing (meth)acrylic monomer may include at least one selected from among 2-ethylhexyl (meth)acrylate, n-butyl (meth)acrylate, iso-octyl (meth)acrylate, propyl (meth)acrylate, t-butyl (meth)acrylate, iso-butyl (meth)acrylate, pentyl (meth)acrylate, hexyl (meth)acrylate, heptyl (meth)acrylate, octyl (meth)acrylate, nonyl (meth)acrylate, and decyl (meth)acrylate, preferably at least one selected from among 2-ethylhexyl (meth)acrylate, n-butyl (meth)acrylate, and iso-octyl (meth)acrylate, and, in an embodiment, at least one of 2-ethylhexyl (meth)acrylate or iso-octyl (meth)acrylate.

The hydroxyl group-containing (meth)acrylic monomer may be useful for providing peel strength of the second region of the adhesive film. The hydroxyl group-containing (meth)acrylic monomer may include a C₁ to C₁₀ (meth)acrylate containing at least one hydroxyl group at an ester site thereof. For example, the hydroxyl group-containing (meth)acrylic monomer may include at least one selected from among 2-hydroxybutyl (meth)acrylate, 4-hydroxybutyl (meth)acrylate, 2-hydroxyethyl (meth)acrylate, 2-hydroxypropyl (meth)acrylate, 3-hydroxypropyl (meth)acrylate, and 6-hydroxyhexyl (meth)acrylate, without being limited thereto.

In an embodiment, the hydroxyl group-containing (meth)acrylic monomer includes at least one of 4-hydroxybutyl (meth)acrylate or 2-hydroxyethyl (meth)acrylate.

The alkylene glycol group-containing (meth)acrylic monomer improves flexibility of the second region of the adhesive film. In addition, the alkylene glycol group-containing (meth)acrylic monomer can assist in providing excellent foldability to the adhesive film by containing an alkylene glycol group at the ester site. Herein, "alkylene glycol group" refers to (C₂ to C₄ alkylene-O-).

In an embodiment, the alkylene glycol group-containing (meth)acrylic monomer may have a homopolymer glass transition temperature of -90°C to -55°C, and, in an embodiment, -90°C to -60°C, and, in an embodiment, -75°C to -60°C. Within these ranges, the alkylene glycol group-containing (meth)acrylic monomer can reduce modulus of the second region while improving foldability of the adhesive film at low temperature. The alkylene glycol group-containing (meth)acrylic monomer may include a monofunctional acrylate having an ethylene oxide group (-CH₂CH₂O-) or a propylene oxide group (-CH₂CH₂CH₂O-), and, in an embodiment, an ethylene oxide group.

The alkylene glycol group-containing (meth)acrylic monomer may include, for example, an ether-based (meth)acrylate containing at least 1 mole, for example, 2 moles to 20 moles, of ethylene glycol. In an embodiment, a (meth)acrylic monomer having an ethylene glycol group may include at least one selected from among poly(ethylene glycol) methyl ether (meth)acrylate containing 6 moles to 13 moles of ethylene glycol, poly(ethylene glycol) ethylhexyl ether (meth)acrylate containing 2 to 10 moles of ethylene glycol, and poly(ethylene glycol) octyl ether (meth)acrylate containing 2 to 20 moles of ethylene glycol. In an embodiment, the alkylene glycol group-containing (meth)acrylate includes at least one selected from among di(ethylene glycol) 2-ethylhexyl ether (meth)acrylate, triethylene glycol 2-ethylhexyl ether (meth)acrylate, di(ethylene glycol) octyl ether (meth)acrylate, and di(ethylene glycol) octyl ether (meth)acrylate.

In an embodiment, in the monomer mixture, the alkyl group-containing (meth)acrylic monomer may be present in an amount of 50 wt% to 90 wt%, for example,
50,51,52,53,54,55,56,57,58,59,60,61,62,63,64,65,66,67,68,69,70,71,72,73,74,75,76,7 7,78,79,80,81,82,83,84,85,86,87,88,89,90 wt%, 50 wt% to 80 wt%, or 50 wt% to 70 wt%, the hydroxyl group-containing (meth)acrylic monomer may be present in an amount of 1 wt% to 30 wt%, for example,
1,2,3,4,5,6,7,8,9,10,11,12,13,14,15,16,17,18,19,20,21,22,23,24,25,26,27,28,29,30 wt%, 1 wt% to 25 wt%, or 5 wt% to 25 wt%, and the alkylene glycol group-containing (meth)acrylic monomer may be present in an amount of 5 wt% to 40 wt%, for example, 5,6,7,8,9,10,11,12,13,14,15,16,17,18,19,20,21,22,23,24,25,26,27,28,29,30,31,32,33,3 4,35,36,37,38,39,40 wt%, 10 wt% to 40 wt%, or 20 wt% to 40 wt%. Within this range, the second region can easily achieve the aforementioned indentation modulus and storage modulus.

In an embodiment, the alkyl group-containing (meth)acrylic monomer, the hydroxyl group-containing (meth)acrylic monomer, and the alkylene glycol group-containing (meth)acrylic monomer may be present in a total amount of 95 wt% or more, for example, 95 wt% to 100 wt%, or 99 wt% to 100 wt%, or 100 wt%, in the monomer mixture. Within this range, the second region can easily achieve the aforementioned indentation modulus.

The photoinitiator can cure the composition to form the second region, or can polymerize any residual monomers remaining after polymerization of the monomer mixture in the composition. In an embodiment, the photoinitiator includes a photo-radical initiator.

The photoinitiator may be selected from among any suitable photoinitiator capable of inducing polymerization reaction of a radical polymerizable compound described below during curing by light irradiation or the like. For example, a benzoin photoinitiator, a hydroxyketone photoinitiator, an aminoketone photoinitiator, or a phosphine oxide photoinitiator may be used.

In an embodiment, the photoinitiator may be present in an amount of 0.0001 parts by weight to 5 parts by weight, and, in an embodiment, 0.5 parts by weight to 3 parts by weight, and, in an embodiment, 0.5 parts by weight to 1 part by weight, relative to 100 parts by weight of the monomer mixture. Within these ranges, the photoinitiator can secure complete curing reaction, can prevent deterioration in light transmittance of the second region due to remaining initiator, and can reduce bubble generation while securing good reactivity.

The crosslinking agent may increase mechanical strength of the second region by increasing the crosslinking degree of the second region.

The crosslinking agent may include an actinic radiation-curable polyfunctional (meth)acrylate. For example, the crosslinking agent may include any of bifunctional (meth)acrylates, such as 1,4-butanediol di(meth)acrylate, 1,6-hexanediol di(meth)acrylate, neopentyl glycol di(meth)acrylate, polyethylene glycol di(meth)acrylate, neopentyl glycol adipate di(meth)acrylate, dicyclopentanyl di(meth)acrylate, caprolactone-modified dicyclopentenyl di(meth)acrylate, ethylene oxide-modified di(meth)acrylate, di(meth)acryloxyethyl isocyanurate, allylated cyclohexyl di(meth)acrylate, tricyclodecane dimethanol (meth)acrylate, dimethylol dicyclopentane di(meth)acrylate, ethylene oxide-modified hexahydrophthalic acid di(meth)acrylate, tricyclodecane dimethanol (meth)acrylate, neopentyl glycol-modified trimethylpropane di(meth)acrylate, adamantane di(meth)acrylate, 9,9-bis[4-(2-acryloyloxyethoxy)phenyl]fluorene, and the like; trifunctional (meth)acrylates, such as trimethylolpropane tri(meth)acrylate, dipentaerythritol tri(meth)acrylate, propionic acid-modified dipentaerythritol tri(meth)acrylate, pentaerythritol tri(meth)acrylate, propylene oxide-modified trimethylolpropane tri(meth)acrylate, trifunctional urethane (meth)acrylate, tris(meth)acryloxyethyl isocyanurate, and the like; tetrafunctional (meth)acrylates, such as diglycerin tetra(meth)acrylate, pentaerythritol tetra(meth)acrylate, and the like; pentafunctional (meth)acrylates, such as dipentaerythritol penta(meth)acrylate and the like; and hexafunctional (meth)acrylates, such as dipentaerythritol hexa(meth)acrylate, caprolactone-modified dipentaerythritol hexa(meth)acrylate, caprolactone-modified urethane (meth)acrylate, and a reaction product of an isocyanate monomer and trimethylolpropane tri(meth)acrylate, without being limited thereto.

In an embodiment, the crosslinking agent may be present in an amount of 0.001 parts by weight to 5 parts by weight, and, in an embodiment, 0.1 parts by weight to 3 parts by weight, and, in an embodiment, 0.1 parts by weight to 1 part by weight, relative to 100 parts by weight of the monomer mixture or a polymer of the monomer mixture. Within these ranges, the second region can achieve good peel strength and improved reliability.

The silane coupling agent may be a typical silane coupling agent known to those skilled in the art.

In an embodiment, the silane coupling agent may be present in an amount of 0.001 parts by weight to 5 parts by weight, and, in an embodiment, 0.1 parts by weight to 3 parts by weight, and, in an embodiment, 0.1 parts by weight to 1 part by weight, relative to 100 parts by weight of the monomer mixture or a polymer of the monomer mixture. Within these ranges, the second region can secure good peel strength and improved reliability.

The additives may include at least one selected from among UV absorbents, reaction inhibitors, adhesion enhancers, thixotropic agents, conductivity imparting agents, color modifiers, stabilizers, antioxidants, leveling agents, and antistatic agents, without being limited thereto. The content of the additives in the composition, that is, in the adhesive film, may be suitably selected within a range that does not deteriorate the effects of the invention.

### First region

The first region may be formed of a composition described below to achieve the aforementioned indentation modulus ratio between the first region and the second region and the aforementioned refractive index difference between the first region and the second region.

The first region may include a cured product of a composition, which includes a monomer mixture comprising a first monomer, a second monomer, a third monomer, and a fourth monomer, and a photoinitiator.

In an embodiment, the first region may include a cured product of a composition that includes a polymer of a monomer mixture of a first monomer, a second monomer, a third monomer, and a fourth monomer, and a photoinitiator.

The composition may further include at least one of a crosslinking agent or a silane coupling agent.

The first monomer is an alkyl group-containing (meth)acrylic monomer. The alkyl group-containing (meth)acrylic monomer may be selected from among those described above with respect to the second region. In an embodiment, the alkyl group-containing (meth)acrylic monomer may include at least one of 2-ethylhexyl (meth)acrylate or iso-octyl (meth)acrylate. The first monomer may be different from the fourth monomer described below.

In an embodiment, the first monomer may be present in an amount of 10 wt% to 50 wt%, for example,
10,11,12,13,14,15,16,17,18,19,20,21,22,23,24,25,26,27,28,29,30,31,32,33,34,35,36,3 7,38,39,40, 41, 42, 43, 44, 45, 46, 47, 48, 49, 50 wt%, 10 wt% to 40 wt%, or 20 wt% to 40 wt%, in the monomer mixture. Within these ranges, the composition can facilitate formation of the first region of the adhesive film and can secure peel strength of the first region.

The second monomer is a hydroxyl group-containing (meth)acrylic monomer. The hydroxyl group-containing (meth)acrylic monomer may be selected from among those described above with respect to the second region. In an embodiment, the hydroxyl group-containing (meth)acrylic monomer may be 4-hydroxybutyl (meth)acrylate.

In an embodiment, the second monomer may be present in an amount of 1 wt% to 30 wt%, for example,
1,2,3,4,5,6,7,8,9,10,11,12,13,14,15,16,17,18,19,20,21,22,23,24,25,26,27,28,29,30 wt%, 1 wt% to 20 wt%, or 1 wt% to 10 wt%, in the monomer mixture. Within these ranges, the composition can secure peel strength of the first region.

The third monomer may have a higher homopolymer glass transition temperature than each of the first monomer and the second monomer. The third monomer may have a higher homopolymer glass transition temperature than each of the first monomer and the second monomer, whereby the adhesive film can easily achieve the aforementioned indentation modulus ratio of the first region to the second region.

In an embodiment, the third monomer may have a homopolymer glass transition temperature of 50°C or higher, for example, 50°C to 200°C, or 50°C to 180°C. Within these ranges, the adhesive film can achieve the aforementioned indentation modulus ratio of the first region to the second region.

In an embodiment, the third monomer may include at least of a (meth)acrylic monomer having an alicyclic group at an ester site thereof or a (meth)acrylic monomer having a heterocyclic group (for example, a morpholine group) at an ester site thereof. For example, the third monomer may include at least one selected from among isobornyl (meth)acrylate, bornyl (meth)acrylate, dihydrodicyclopentadienyl (meth)acrylate, (meth)acryloylmorpholine, cyclohexyl (meth)acrylate, and n-vinylpyrrolidone.

In an embodiment, the third monomer may be present in an amount of 1 wt% to 30 wt%, for example,
1,2,3,4,5,6,7,8,9,10,11,12,13,14,15,16,17,18,19,20,21,22,23,24,25,26,27,28,29,30 wt%, 1 wt% to 20 wt%, or 1 wt% to 10 wt%, in the monomer mixture. Within these ranges, the adhesive film can achieve the indentation modulus of the first region.

The fourth monomer is t-butyl (meth)acrylate.

The first region is formed of a composition including a monomer mixture comprising t-butyl (meth)acrylate as the fourth monomer. Thus, it is possible to minimize or reduce visibility of the interface between the first region and the second region by securing a refractive index difference of 0.02 or less between the first region and the second region without affecting the indentation modulus ratio of 1.5 or more between the first region and the second region. Although it is believed that these effects result from the fact that t-butyl (meth)acrylate has a lower refractive index than the third monomer due to a higher homopolymer glass transition temperature thereof without reduction in indentation modulus of the first region and is similar to the alkyl group-containing (meth)acrylate monomer in the second region, the present invention is not limited thereto.

The t-butyl (meth)acrylate may have a higher homopolymer glass transition temperature than each of the first monomer and the second monomer.

The t-butyl (meth)acrylate is different from the third monomer in that the t-butyl (meth)acrylate has an alkyl group as a t-butyl group.

The t-butyl (meth)acrylate may have a lower homopolymer glass transition temperature than the third monomer. Accordingly, it is possible to prevent or substantially prevent excessive increase in indentation modulus of the first region even with an excess of the t-butyl (meth)acrylate to reach a refractive index difference of 0.02 or less.

In an embodiment, the fourth monomer may be present in an amount of 40 wt% to 80 wt%, for example,
40,41,42,43,44,45,46,47,48,49,50,51,52,53,54,55,56,57,58,59,60,61,62,63,64,65,66,6 7,68,69,70,71,72,73,74,75,76,77,78,79,80 wt%, 40 wt% to 75 wt%, or 40 wt% to 70 wt%. Within these ranges, the adhesive film can easily reach the indentation modulus ratio between the first region and the second region and the refractive index difference between the first region and the second region.

In an embodiment, the first monomer, the second monomer, the third monomer, and the fourth monomer may be present in a total amount of 95 wt% or more, for example, 95 wt% to 100 wt%, 100 wt%, in the monomer mixture.

The photoinitiator may be substantially the same as those described with respect to the second region.

In an embodiment, the photoinitiator may be present in an amount of 0.0001 parts by weight to 5 parts by weight, and, in an embodiment, 0.5 parts by weight to 3 parts by weight, and, in an embodiment, 0.5 parts by weight to 1 part by weight, relative to 100 parts by weight of the monomer mixture. Within these ranges, the photoinitiator can secure complete curing reaction, can prevent or substantially prevent deterioration in light transmittance of the first region due to remaining initiator, and can reduce bubble generation while securing good reactivity.

The composition may further include at least one selected from among a crosslinking agent, a silane coupling agent, and additives.

The crosslinking agent, the silane coupling agent, and the additives may be the same as those described with respect to the second region.

In an embodiment, the crosslinking agent may be present in an amount of 0.001 parts by weight to 5 parts by weight, and, in an embodiment, 0.1 parts by weight to 3 parts by weight, and, in an embodiment, 0.1 parts by weight to 1 part by weight, relative to 100 parts by weight of the monomer mixture or a polymer of the monomer mixture. Within these ranges, the first region can achieve good peel strength and improved reliability.

In an embodiment, the silane coupling agent may be present in an amount of 0.001 parts by weight to 5 parts by weight, and, in an embodiment, 0.1 parts by weight to 3 parts by weight, and, in an embodiment, 0.1 parts by weight to 1 part by weight, relative to 100 parts by weight of the monomer mixture or a polymer of the monomer mixture. Within these ranges, the first region can achieve good peel strength and improved reliability.

In an embodiment, the adhesive film may have a thickness of 20 µm or less, for example, greater than 0 µm to 20 µm, or 5 µm to 20 µm. Within these ranges, the adhesive film is applicable to an optical display apparatus.

In an embodiment, the first region and the second region may have substantially the same thickness and may have a thickness of 20 µm or less, for example, greater than 0 µm to 20 µm, or 5 µm to 20 µm. Within these ranges, the adhesive film is applicable to an optical display apparatus.

An optical display apparatus according to one or more embodiments includes the adhesive film according to an embodiment or an optical member including the same.

The optical display apparatus may include a light emitting diode display including an organic light emitting diode display and the like, or a liquid crystal display, and the like. The optical display apparatus may include a foldable optical display apparatus, or the optical display apparatus may include a non-foldable optical display apparatus.

Next, the present invention will be described in further detail with reference to some examples. However, it is to be understood that these examples are provided for illustration and are not to be construed in any way as limiting the invention.

### Example 1

### Preparation of adhesive composition for second region

In a 1 L reactor provided with a cooling system under a nitrogen atmosphere, 100 parts of a monomer mixture comprising 60 parts by weight of 2-ethylhexyl acrylate (2-EHA), 15 parts by weight of 4-hydroxybutyl acrylate (4-HBA), and 25 parts by weight of di(ethylene glycol) 2-ethylhexyl ether acrylate were placed. 0.005 wt% of a photoinitiator (Irgacure 651) was added to the monomer mixture and sufficiently mixed therewith in the reactor. After replacing dissolved oxygen in the reactor with nitrogen gas, the monomer mixture was partially polymerized by UV irradiation using a low-pressure mercury lamp for several minutes, thereby preparing a composition comprising a partial (meth)acrylic copolymer of the monomer mixture. To the composition, 0.02 parts by weight of dipentaerythritol hexaacrylate (DPHA) and 0.2 parts by weight of KBM403 as a silane coupling agent were added and mixed to prepare a photocurable adhesive composition.

### Preparation of adhesive composition for first region

In a 1 L reactor provided with a cooling system under a nitrogen atmosphere, 100 parts of a monomer mixture comprising 35 parts by weight of 2-ethylhexyl acrylate (2-EHA), 45 parts by weight of t-butyl acrylate, 5 parts by weight of 4-hydroxybutyl acrylate (4-HBA), 10 parts by weight of isobornyl acrylate (IBXA), and 5 parts by weight of acryloylmorpholine (ACMO) were placed. 0.005 wt% of a photoinitiator (Irgacure 651) was added to the monomer mixture and sufficiently mixed therewith in the reactor.

After replacing dissolved oxygen in the reactor with nitrogen gas, the monomer mixture was partially polymerized by UV irradiation using a low-pressure mercury lamp for several minutes, thereby preparing a composition comprising a partial (meth)acrylic copolymer of the monomer mixture. To the composition, 0.2 parts by weight of dipentaerythritol hexaacrylate (DPHA) and 0.2 parts by weight of KBM403 as a silane coupling agent were added and mixed to prepare a photo-curable adhesive composition.

### Preparation of adhesive film

The adhesive compositions for the first and second regions prepared above were applied to a polyethylene terephthalate (PET) film (light transmittance of 90% at a wavelength of 380 nm) as a first release film, and the resulting coats were covered with a PET film as a second release film, followed by irradiation with UV light at an intensity of 2,000 mJ/cm², thereby preparing a laminate of the first release film, the adhesive film, and the second release film. The adhesive film has a top plane and a cross-section as shown in FIG. 1 and FIG. 2.

### Example 2

An adhesive film was prepared in the same manner as in Example 1 except that each component of the compositions for the first region and the second region was changed as listed in Table 1.

### Comparative Examples 1 to 3

Adhesive films were prepared in the same manner as in Example 1 except that each component of the compositions for the first region and the second region was changed as listed in Table 1.

Details of the adhesive films prepared in the Examples and Comparative Examples are shown in Table 1. The adhesive films of the Examples and Comparative Examples were evaluated as to properties shown in Table 2.

### Refractive Index (Unit: none)

With both release films removed from each of the adhesive sheets of the first release film/adhesive film/second release film prepared in the Examples and Comparative Examples, the refractive indexes of the first and second regions were measured using a prism coupler.

### Indentation modulus (EIT, unit: MPa)

The first and second regions of the adhesive film were separated from each other.

For the first region, the indentation modulus was measured at intervals of 5 mm in the first direction of the adhesive film and averaged.

For the second region, the indentation modulus was measured at intervals of 5 mm intervals in the first direction and the minimum value was obtained.

The indentation modulus was measured using an HM2000LT (Fischer Co., Ltd.) by the following method.

### Measurement of indentation modulus:

An adhesive film was obtained by removing both release films from each of the adhesive sheets of the first release film/adhesive film/second release film prepared in the Examples and Comparative Examples, and was attached to an alkali-free glass plate. Indentation modulus was measured by applying a maximum force of 1,000 µN to the top of the adhesive film attached to the glass plate for 5 seconds (loading), holding the force for 2 seconds (holding), and removing the force for 5 seconds (unloading) using a nano-indenter (ball tip) at 25°C.

### Storage modulus (G', unit: kPa)

The first and second regions of the adhesive film were separated from each other.

Viscoelasticity in each of the first and second regions was measured under auto strain conditions at a shear rate of 1 rad/sec and a strain of 1% using a dynamic viscoelasticity rheometer (ARES DHR-3, TA). A specimen was prepared by stacking the first region and the second region multiple times to a thickness of 500 µm, followed by punching the resulting stack using a punching machine having a diameter of 8 mm. Storage modulus at 25°C was measured under a condition of a temperature increase rate of 5°C/min from -60°C to 90°C while applying a load of 1.0 N to the specimen using a stainless steel jig having a diameter of 8 mm.

### Visibility of interface between first region and second region

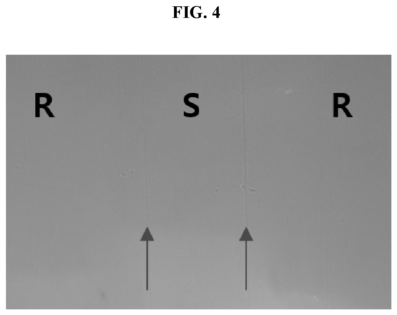

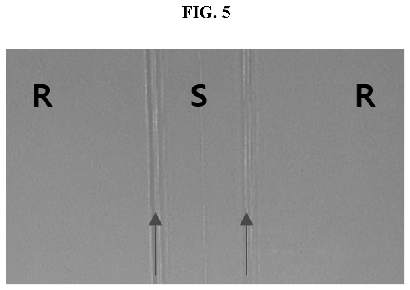

For each of the adhesive films prepared in the Examples and Comparative Examples, it was checked whether the interface between the first and second regions was visible to the naked eye. An adhesive film not allowing the interface therebetween to be visible was evaluated as O and an adhesive film allowing the interface therebetween to be visible was evaluated as X. FIG. 4 and FIG. 5 show the results.

### Pen drop impact resistance (unit: cm)

After removing the first release PET film from each of the adhesive sheets of the first release film/adhesive film/second release film prepared in the Examples and Comparative Examples, a polyethylene terephthalate (PET) film (thickness: 75 µm) was stacked on one exposed surface of the adhesive film, and after removing the second release PET film from the adhesive sheet, a PET film (thickness: 125 µm) was stacked on the other exposed surface of the adhesive film, thereby preparing a specimen. For the prepared specimen, a ball-point pen (Cristal, diameter: 0.7 mm, BIC Co., Ltd.) was dropped from a predetermined height onto the PET film (thickness: 75 µm) to evaluate the first height at which an imprint was formed on the lowermost PET film (thickness: 125 µm). The first height at which an imprint was formed on the PET film was applied as an evaluation result that simulates a height of a pixel breaking point and a height at which a window glass breaks in an actual foldable panel, and could be checked with a magnifying glass or an optical microscope. A higher height indicates better pen drop impact resistance. An adhesive film having an impact resistance of 4 cm or more can be used in display apparatuses.

**Table 1**

| | | Monomer | | | | | | | | Crosslinking agent | Coupling agent |
|---|---|---|---|---|---|---|---|---|---|---|---|
| | | 2-EHA | t-BA | 4-HBA | EHDG | HEA | IBXA | ACMO | DCPA | DPHA | KBM403 |
| Example 1 | First region | 35 | 45 | 5 | 0 | 0 | 10 | 5 | 0 | 0.2 | 0.2 |
| | Second region | 60 | 0 | 15 | 25 | 0 | 0 | 0 | 0 | 0.02 | 0.2 |
| Example 2 | First region | 30 | 60 | 3 | 0 | 0 | 7 | 0 | 0 | 0.2 | 0.2 |
| | Second region | 60 | 0 | 15 | 25 | 0 | 0 | 0 | 0 | 0.02 | 0.2 |
| Comparati ve Example 1 | First region | 35 | 0 | 0 | 0 | 25 | 0 | 0 | 40 | 0.2 | 0.2 |
| | Second region | 60 | 0 | 15 | 25 | 0 | 0 | 0 | 0 | 0.02 | 0.2 |
| Comparative Example 2 | First region | 40 | 0 | 13 | 0 | 0 | 45 | 2 | 0 | 0.2 | 0.2 |
| | Second region | 60 | 0 | 15 | 25 | 0 | 0 | 0 | 0 | 0.02 | 0.2 |
| Comparati ve Example 3 | First region | 55 | 0 | 15 | 25 | 0 | 0 | 5 | 0 | 0.02 | 0.2 |
| | Second region | 60 | 0 | 15 | 25 | 0 | 0 | 0 | 0 | 0.02 | 0.2 |

| | | | | | | | | | | | |
|---|---|---|---|---|---|---|---|---|---|---|---|
| **[00141]** *HEA: 2-hydroxyethyl acrylate [00142] *DCPA: Dihydrodicyclopentadienyl acrylate | | | | | | | | | | | |

**Table 2**

| | | Refractive index (Rf) | | EIT | G' | Visibility of interface | Impact resistance |
|---|---|---|---|---|---|---|---|
| | | Rf | Difference | | | | |
| Example 1 | First region | 1.4732 | 0.0008 | 16 | 480 | ○ | 5.5 |
| | Second region | 1.4724 | - | 4 | 30 | | 1.5 |
| Example 2 | First region | 1.4683 | 0.0041 | 12 | 300 | ○ | 4 |
| | Second region | 1.4724 | - | 4 | 30 | | 1.5 |
| Comparative Example 1 | First region | 1.5009 | 0.0285 | 15 | 450 | X | 4.5 |
| | Second region | 1.4724 | - | 4 | 30 | | 1.5 |
| Comparative Example 2 | First region | 1.5053 | 0.0329 | 12 | 300 | X | 4 |
| | Second region | 1.4724 | - | 4 | 30 | | 1.5 |
| Comparative Example 3 | First region | 1.4810 | 0.0086 | 5 | 40 | ○ | 1.8 |
| | Second region | 1.4724 | - | 4 | 30 | | 1.5 |

As shown in Table 2, the adhesive films of the Examples have suitable properties for each of the folding and non-folding portions, and can significantly improve usability of a foldable optical display apparatus by minimizing or reducing visibility of the interface between the folding portion and the non-folding portion. As shown in FIG. 4, the interface between the folding portion S and the non-folding portion R was not visible at all.

However, as shown in Table 2, the adhesive films of the Comparative Examples allowed the interface between the folding portion and the non-folding portion to be visible or had low impact resistance. Further, as shown in FIG. 5, the interface between the folding portion S and the non-folding portion R was visible.

While some embodiments have been described herein, it is to be understood that various modifications, changes, alterations, and equivalent embodiments may be made by those skilled in the art without departing from the spirit and scope of the invention.

## Claims

1. An adhesive film (10) comprising,
two first regions (12) arranged in a first direction, and a second region (11) between the first regions (12),
wherein an indentation modulus ratio of an indentation modulus of the first region (12) to an indentation modulus of the second region (11) is greater than or equal to 1.5, and
a refractive index difference between the first region (12) and the second region (11) is less than or equal to 0.02.

2. The adhesive film (10) as claimed in claim 1, wherein the first region (12) has an indentation modulus at 25°C of 10 MPa to 30 MPa, and the second region (11) has an indentation modulus at 25°C of 0.5 MPa to 10 MPa.

3. The adhesive film (10) as claimed in claim 1 or 2, wherein the first region (12) has a refractive index of 1.3 to 1.5, and the second region (11) has a refractive index of 1.3 to 1.5.

4. The adhesive film (10) as claimed in any of the claims 1 to 3, wherein the first region (12) and the second region (11) are integrally formed with each other.

5. The adhesive film (10) as claimed in any of the claims 1 to 4, wherein the second region (11) comprises a cured product of a composition comprising a polymer of a monomer mixture comprising an alkyl group-containing (meth)acrylic monomer, a hydroxyl group-containing (meth)acrylic monomer and an alkylene glycol group-containing (meth)acrylic monomer, and a photoinitiator.

6. The adhesive film (10) as claimed in any of the claims 1 to 5, wherein the monomer mixture comprises 50 wt% to 90 wt% of the alkyl group-containing (meth)acrylic monomer, 1 wt% to 30 wt% of the hydroxyl group-containing (meth)acrylic monomer, and 5 wt% to 40 wt% of the alkylene glycol group-containing (meth)acrylic monomer.

7. The adhesive film (10) as claimed in any of the claims 1 to 6, wherein the composition further comprises at least one of a crosslinking agent or a silane coupling agent and/or at least one of a crosslinking agent or a photoinitiator.

8. The adhesive film (10) as claimed in any of the claims 1 to 7, wherein the alkyl group-containing (meth)acrylic monomer comprises at least one of 2-ethylhexyl (meth)acrylate or iso-octyl (meth)acrylate;
the hydroxyl group-containing (meth)acrylic acid monomer comprises at least one of 4-hydroxybutyl (meth)acrylate or 2-hydroxyethyl (meth)acrylate; and
the alkylene glycol group-containing (meth)acrylic monomer comprises at least one ether-based (meth)acrylate containing 1 mole or more of ethylene glycol.

9. The adhesive film (10) as claimed in any of the claims 1 to 8, wherein the first region (12) comprises a cured product of a composition comprising a monomer mixture comprising a first monomer, a second monomer, a third monomer and a fourth monomer, and a photoinitiator,
the fourth monomer being t-butyl (meth)acrylate.

10. The adhesive film (10) as claimed in any of the claims 1 to 9, wherein the first monomer is an alkyl group-containing (meth)acrylic monomer,
the second monomer is a hydroxyl group-containing (meth)acrylic monomer, and
the third monomer has a homopolymer glass transition temperature of 50°C or higher and is at least one of a (meth)acrylic monomer having alicyclic groups at an ester site thereof or a (meth)acrylic monomer having a heterocyclic group at an ester site thereof.

11. The adhesive film (10) as claimed in any of the claims 1 to 10, wherein the first monomer comprises at least one of 2-ethylhexyl (meth)acrylate or iso-octyl (meth)acrylate;
the second monomer comprises at least one of 4-hydroxybutyl (meth)acrylate or 2-hydroxyethyl (meth)acrylate;
the third monomer comprises at least one selected from among isobornyl (meth)acrylate, bornyl (meth)acrylate, dihydrodicyclopentadienyl (meth)acrylate, (meth)acryloylmorpholine, cyclohexyl (meth)acrylate, and n-vinylpyrrolidone; and
the fourth monomer is t-butyl (meth)acrylate.

12. The adhesive film (10) as claimed in any of the claims 1 to 11, wherein the monomer mixture comprises 10 wt% to 50 wt% of the first monomer, 1 wt% to 30 wt% of the second monomer, 1 wt% to 30 wt% of the third monomer, and 40 wt% to 80 wt% of the fourth monomer.

13. The adhesive film (10) as claimed in any of the claims 1 to 12, wherein a storage modulus ratio of the first region (12) to the second region (11) at 25°C is greater than or equal to 10.

14. An optical member comprising the adhesive film (10) as claimed in any of the claims 1 to 13.

15. An optical display apparatus comprising the adhesive film (10) as claimed in any of the claims 1 to 13.
